(19) Europäisches Patentamt
European Patent Office
Office européen des brevets

(11) EP 1 053 853 A1

(12) EUROPEAN PATENT APPLICATION

(43) Date of publication:
**22.11.2000 Bulletin 2000/47**

(51) Int. Cl.7: **B29C 45/42**

(21) Application number: **00109627.0**

(22) Date of filing: **05.05.2000**

(84) Designated Contracting States:
**AT BE CH CY DE DK ES FI FR GB GR IE IT LI LU MC NL PT SE**
Designated Extension States:
**AL LT LV MK RO SI**

(30) Priority: **07.05.1999 JP 12679799**

(71) Applicant:
**Kabushiki Kaisha Yushin Seiki**
**Kyoto-shi, Kyoto-fu, 612 8492 (JP)**

(72) Inventor:
**Shiozaki, Tetsurou,**
**c/o K. K. Yushin Seiki**
**Kyoto-shi, Kyoto-fu, 612-8492 (JP)**

(74) Representative:
**Leson, Thomas Johannes Alois, Dipl.-Ing.**
**Patentanwälte**
**Tiedtke-Bühling-Kinne & Partner,**
**Bavariaring 4**
**80336 München (DE)**

# (54) Apparatus for taking out molded products

(57) In an apparatus for taking out a molded product (20) by adsorbing after die opening, a CPU (1) calculates a target arrival time at which a retaining mechanism section (7) will arrive at a take-out position, and at the moment (ST) at which the target arrival time becomes coincident with the ejection time Te' required for the separation of the molded product (20), an ejection signal is released for starting the operation of the ejecting mechanism section (8). With this arrangement, the time for taking out the molded product is reduced while imperfect adsorption by the retaining mechanism section (7) is avoided.

Fig. 1

9
2
3
7
Molded Product Adsorbing Mechanism
ROM
RAM
Molded Product Retaining Mechanism Section
1
CPU
10
8
Adsorption Pressure Detecting Section
Ejecting Mechanism Section
6
5
4
Position Detector Means
Moving Mechanism Section
Time Measuring Means

EP 1 053 853 A1

## Description

## Background of the Invention

Field of the Invention

The present invention relates to an apparatus for taking out a molded product by adsorption, while separating the molded product from one of die halves to which it adheres, by means of an ejecting mechanism section after opening, for instance, in an injection molding machine.

Disclosure of the Prior Art

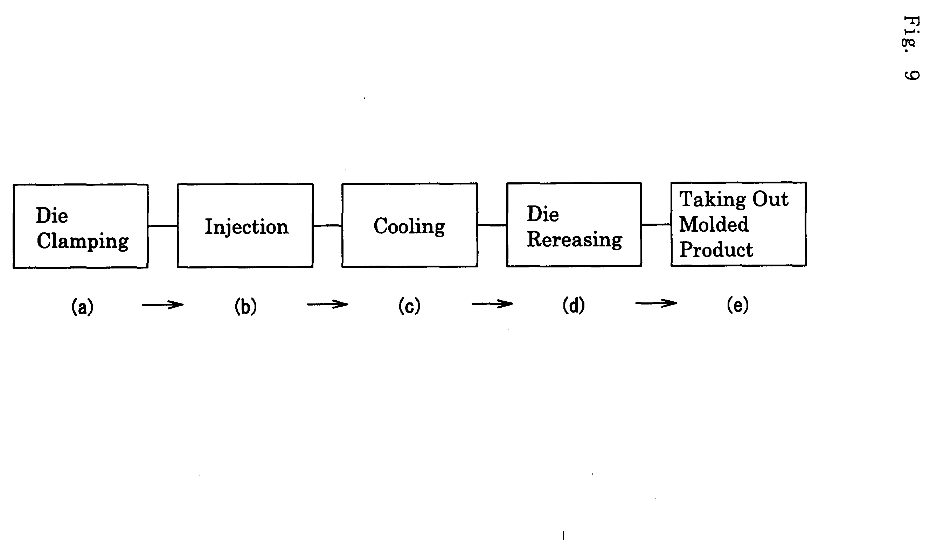

As shown in FIGURE 9, the basic operation of an injection molding machine is carried out in the following procedure. After clamping the die halves (FIGURE 9(a)), a resin is injected into the die cavities (FIGURE 9(b)). When the resin has been cooled (FIGURE 9(c)), the die halves are released (FIGURE 9(d)) and the molded product retaining mechanism section of an apparatus for taking out the products such as a product taking out robot is inserted into the die, thereby to take out the molded product therefrom (FIGURE 9(e)).

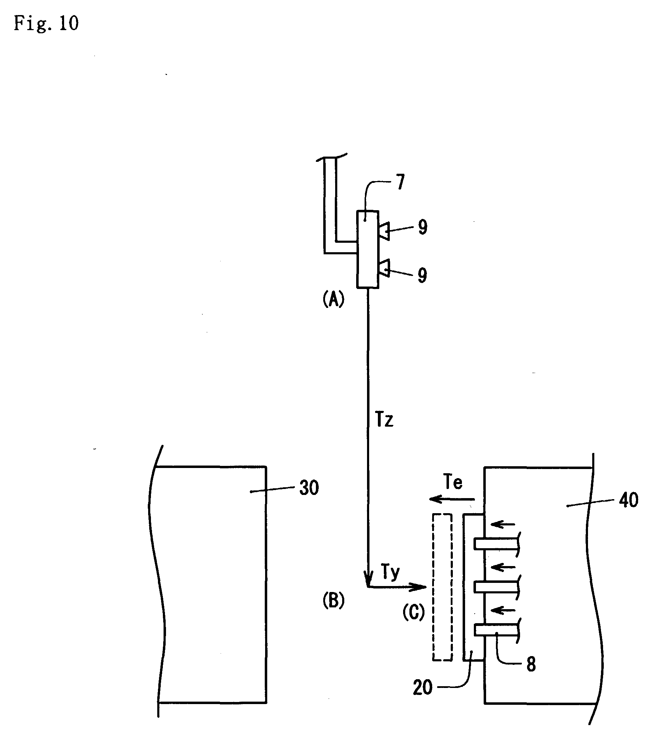

In the removal of the molded product shown in FIGURE 9(e), a retaining mechanism section 7 of the molded product take-out apparatus normally stops at a waiting position (A) as shown in FIGURE 10 and starts moving upon release of a take-out signal after the movable one 40 of die halves 30, 40 has moved, thereby completing die opening. The retaining mechanism section 7 changes its moving direction at a molding product pulling out position (B) and stops when arriving at a molded product take-out position (C). Then, an ejecting mechanism section 8 is activated to separate a molded product 20 from the die half 40 and the molded product 20 is adsorbed by an adsorbing mechanism 9 mounted in the retaining mechanism section 7. The retaining mechanism section 7 is then moved back to the pulling out position (B) with the molded product 20 being in its adsorbed condition, thereby taking out the molded product 20. Thereafter, the retaining mechanism section 7 moves to a molded product retrieving position at which the molded product 20 is released from the adsorption by the adsorbing mechanism 9 for retrieval of the molded product 20. Finally, the retaining mechanism section 7 returns to the initial waiting position (A).

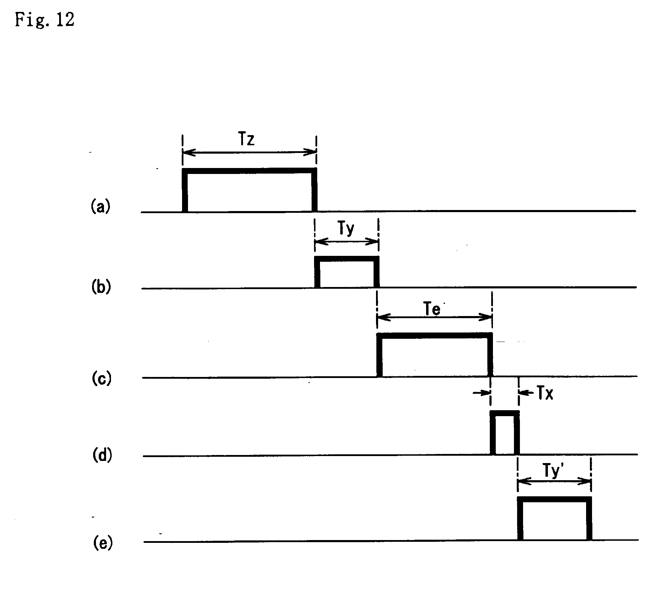

The take-out operation of the apparatus is carried out at the timings shown in FIGURE 12.

Specifically, upon issue of a take-out signal subsequent to completion of die opening, the retaining mechanism section 7 starts to move from the waiting position (A) to the pulling out position (B). The retaining mechanism section 7 changes its moving direction at the pulling out position (B) after an elapse of the time Tz shown in FIGURE 12(a), and then moves toward the take-out position (C) and reaches the take-out position (C) after an elapse of the time Ty shown in FIGURE 12(b). Thereafter, an ejection signal is released so that the ejecting mechanism section 8 starts its operation thereby to separate the molded product 20 from the die half 40. After an elapse of the time Te shown in FIGURE 12(c) at which the ejecting action is completed, the apparatus awaits the time Tx (FIGURE 12(d)) until the adsorption of the molded product 20 by the retaining mechanism section 7 is completed. After the time Ty' shown in FIGURE 12(e) has been elapsed, the retaining mechanism section 7 moves back to the pulling out position (B).

The removing operation takes a comparatively long time (Tz + Ty + Te) after an issue of a take-out signal until adsorption of the molded product 20, which leads to a decrease in operational efficiency.

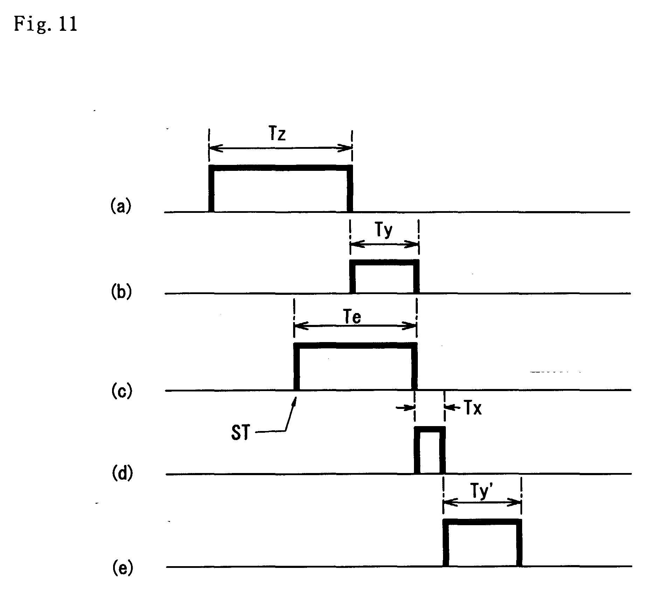

To solve this problem, Japanese Utility Model Publication (KOKOKU) No. 7-27145 (Japanese Utility Model No. 2111643) has proposed the following technique: The movement of the retaining mechanism section 7 (Tz + Ty) is carried out simultaneously with the ejecting action (Te) of the ejecting mechanism section 8 (see FIGURE 11(C)) and an output timing ST for an ejection signal is so calculated as to make the timing at which the retaining mechanism section 7 reaches at the take-out position (C) coincident with the timing at which the ejecting action of the ejecting mechanism section 8 is completed, whereby the total time required for taking out the molded product 20 can be reduced by the time corresponding to the ejection time Te, compared to the above-described apparatus.

In the ejecting mechanism section 8, the temperature of oil in the hydraulic cylinder and lubricating oil when starting operation differs the temperature of those during operation, which sometimes causes variations in the viscous resistance of these oils. During operation, oil temperature becomes higher with decreased viscous resistance, compared to the oil temperature at the time of start-up so that the ejecting action of the ejecting mechanism section 8 becomes faster. In addition, owing to various factors such as the condition of the hydraulic cylinder and the condition of the ejector pin for pricking a molded product, the ejection time of the ejecting mechanism section 8 may vary.

In the case of the take-out apparatus which employs the timings shown in FIGURE 11, the output timing S0 for an ejection signal is calculated beforehand to coincide the moment at which the retaining mechanism section 7 arrives at the take-out position with the moment at which the ejecting action of the ejecting mechanism section 8 is completed. Therefore, if the speed of the ejecting action of the ejecting mechanism section 8 becomes faster, the ejection of the molded product 20 will finish before the arrival of the retaining mechanism section 7. This disadvantage causes imperfect adsorption of the molded product 20 accompanied by a rare occurrence of dropping of the molded product 20.

For detecting the moment at which the ejecting action of the ejecting mechanism section 8 is completed, it is necessary to dispose a detecting means such as a proximate switch at a desired position on the side of the die mechanism 30, 40 and to transmit a signal from the detecting means to the apparatus. The provision of such a detecting means on the side of the die mechanism 30, 40 entails problems such as: further complexity in the die halves 30, 40 which are highly intricate; erroneous operation occurring as the operation of the die halves 30, 40 proceeds with time; and a likelihood of breakage of the die halves 30, 40. Hence, in reality, it is very difficult to accurately detect, only on the side of the apparatus, the moment at which the ejecting action of the ejecting mechanism section 8 is completed (i.e., the moment at which the ejector pin reaches the terminal point of its forward movement), without use of the above detecting means.

**Summary of the Invention**

A primary object of the invention is to grasp the timing of completion of the ejecting action of an ejecting mechanism section, without use of a detecting means disposed on the side of the die mechanism thereby reducing the time required for removing a molded product by a molded product take-out apparatus in which the molded product, which has been separated from a die half by the ejecting mechanism section after die opening, is adsorbed and removed by means of the retaining mechanism section including an adsorbing mechanism.

Another object of the invention is to enable the retaining mechanism section to securely grip a molded product without causing imperfect adsorption.

The above objects can be accomplished by an apparatus for taking out a molded product according to the present invention, the apparatus comprising:

(1) position detector means for detecting the position of a retaining mechanism section during its movement, the retaining mechanism section starting to move upon receipt of a take-out signal instructing actuation of the retaining mechanism section;

(2) adsorption pressure detector means for detecting the adsorption pressure of the adsorbing mechanism which adsorbs a molded product;

(3) measuring means for measuring an ejection time elapsing after an issue of an ejection signal which instructs actuation of the ejecting mechanism section until an issue of an adsorption signal which is released at the time when the pressure detected by the adsorption pressure detector means has reached a preset adsorption pressure value; and

(4) a controller section for outputting a take-out signal, ejection signal and adsorption signal and for calculating a target arrival time at which the retaining mechanism section will arrive at a take-out position where the molded product is to be taken out, when moving from each detected position detected by the position detector means,

the controller section outputting an ejection signal at the moment when the target arrival time becomes coincident with the ejection time which has been measured beforehand by the measuring means.

According to the invention, upon receipt of a take-out signal after die opening, the retaining mechanism section which has been at a waiting position starts to move to a molded product take-out position, while the position detector means constantly detects the position of the retaining mechanism section traveling from the waiting position. The controller section calculates a target arrival time at which the retaining mechanism section will arrive at the molded product take-out position when moving from each detected position detected by the position detector means, and at the moment when the target arrival time has become coincident with an ejection time measured by the measuring means, an ejection signal which instructs to start the operation of the ejecting mechanism section is issued.

It should be noted that the ejection time is measured beforehand by the measuring means based on the adsorption pressure of the adsorption pressure detector means. With this arrangement, the ejection time required for separating the molded product from the die half by means of the ejecting mechanism section can be easily grasped in the apparatus without provision of a detecting means on the side of the die mechanism.

Thus, a target arrival time at which the retaining mechanism section will arrive at the take-out position when moving from each detected position is constantly calculated by the controller section. Then, it is determined whether or not this calculated target arrival time coincides with the ejection time and when the former becomes coincident with the latter, an ejection signal is released thereby starting the operation of the ejecting mechanism section.

In this way, the ejecting mechanism section is operated simultaneously with the movement of the retaining mechanism section, so that the arrival of the retaining mechanism section at the take-out position and the separation of the molded product from the die half by the ejecting mechanism section are completed at substantially the same time.

As a result, the total time required for removing the molded product can be reduced by the time corresponding to the time taken for the ejecting mechanism section to eject the molded product, compared to the prior art system shown in FIGURE 12.

The invention is arranged as described above and therefore has the following inherent features.

The ejection time required for separating the molded product from the die half by means of the ejecting mechanism section can be easily grasped in the apparatus without provision of a detecting means on the side of the die mechanism, and the total time required for taking out the molded product can be reduced by the time corresponding to the ejection time, compared to the existing system shown in FIGURE 12.

The second object can be accomplished by the apparatus for taking out a molded product, wherein the controller section outputs an ejection signal at a moment which is a specified delay time later than the moment at which the election time becomes coincident with the target arrival time.

In this apparatus, the separation of the molded product from the die half is completed the specified delay time after the retaining mechanism section has reached the take-out position. Therefore, even if the speed of the ejection operation of the ejecting mechanism section becomes faster during the operation of the take-out apparatus, the quickened ejection time is offset by the above delay time so that the ejecting action will not finish before the arrival of the retaining mechanism section. Accordingly, the retaining mechanism section can more firmly grip the molded product without causing imperfect adsorption, compared to the existing apparatus shown in FIGURE 11.

In addition, the total time required for removing the molded product can be reduced by the time obtained by subtracting the delay time from the ejection time, compared to the existing apparatus shown in FIGURE 12.

Other objects, features, aspects and advantages of the invention will become more apparent from the following detailed description of embodiments with reference to the accompanying drawings.

**Brief Description of the Drawings**

FIGURE 1 is a block diagram showing the structure of an apparatus for taking out molded products constructed according to a first embodiment of the invention.

FIGURE 2 is a flow chart of an operation in a test mode according to the first embodiment.

FIGURE 3 is a graph for explaining the timings of the operation in the test mode according to the first embodiment.

FIGURE 4 is a flow chart of an operation in an actual take-out mode according to the first embodiment.

FIGURE 5 is a graph for explaining the timings of the operation in the actual take-out mode according to the first embodiment.

FIGURE 6 is a time chart of the operation in the actual take-out mode according to the first embodiment.

FIGURE 7 is a graph for explaining the timings of an operation in an actual take-out mode according to a second embodiment of the invention.

FIGURE 8 is a time chart of the operation in the actual take-out mode according to the second embodiment.

FIGURE 9 is a process drawing showing the basic operation of an apparatus for taking out molded products.

FIGURE 10 is a schematic diagram of the structure of the apparatus.

FIGURE 11 is a time chart of a molded product take-out operation performed in a prior art apparatus.

FIGURE 12 is a time chart of a molded product take-out operation performed in another prior art apparatus.

**DETAILED DESCRIPTION OF THE EMBODIMENTS**

Preferred embodiments of the invention will be hereinafter described with reference to the accompanying drawings.

[First Embodiment]

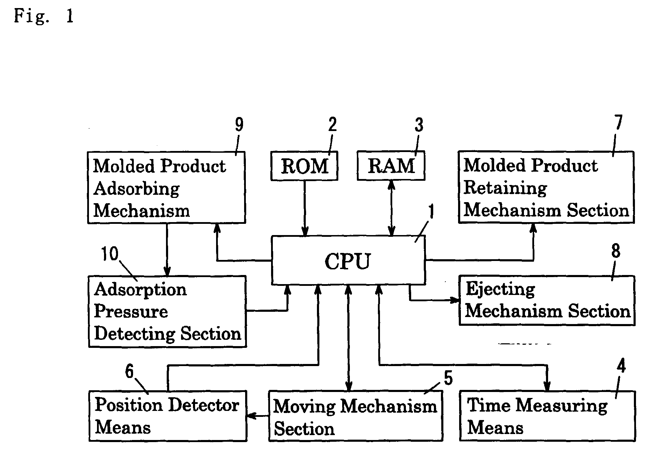

FIGURE 1 is a block diagram showing the structure of a molded product take-out apparatus constructed according a first embodiment of the invention. Referring to FIGURE 1, an apparatus for taking out a molded product according to the first embodiment comprises a retaining mechanism section 7 for removing a molded product from a die half by adsorption using an absorbing mechanism 9 and a moving mechanism section 5 for moving the retaining mechanism section 7, and further comprises a time measuring means 4, a position detector means 6, an adsorption pressure detecting section 10 and a CPU (central processing unit) 1. The basic operation of the present apparatus for taking out a molded product and the structure of each section are similar to those of the prior art shown FIGURES 9 and 10.

The adsorption pressure detector means 10 detects the adsorption pressure of the adsorbing mechanism 9 provided for the retaining mechanism section 7 for adsorbing a molded product. As this detector means 10, a pressure sensor of an analog type or digital type, for instance, may be used.

The time measuring means 4 measures the ejection time elapsing from the moment at which an ejection signal is issued until the moment at which an adsorption signal is issued, the ejection signal instructing a start of the operation of the ejecting mechanism section 8 disposed on the side of a die mechanism, while the adsorption signal being released when the pressure detected by the adsorption pressure detector means has become coincident with a preset adsorption pressure value. With this arrangement, the time (ejection time) required for completing separation of the molded product from the die half is measured.

The position detector means 6 detects the position of the retaining mechanism section 7 which starts moving upon receipt of a molded product take-out signal on the basis of the actuating amount of the moving mechanism section 5. The position detector means 6 constantly detects the position of the retaining mechanism section 7 during its movement after it has started to move from a waiting position upon receipt of a take-out signal.

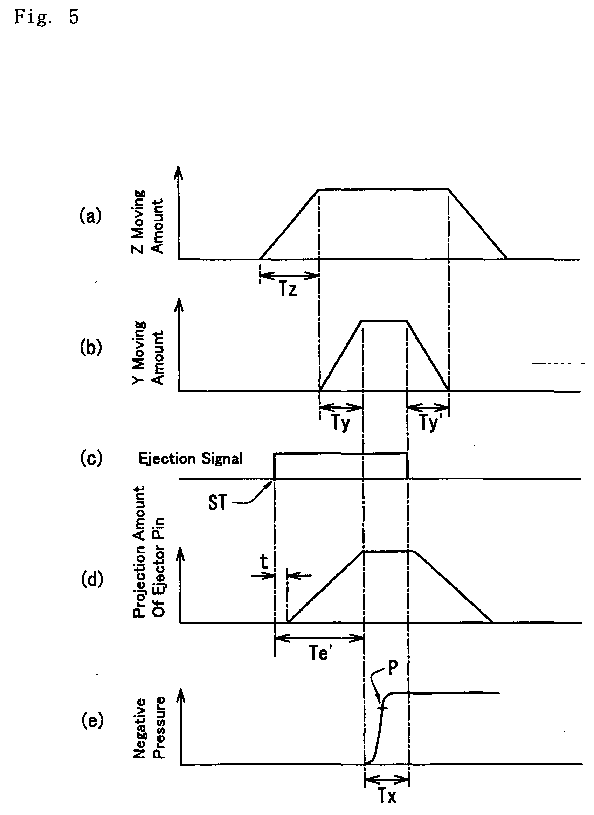

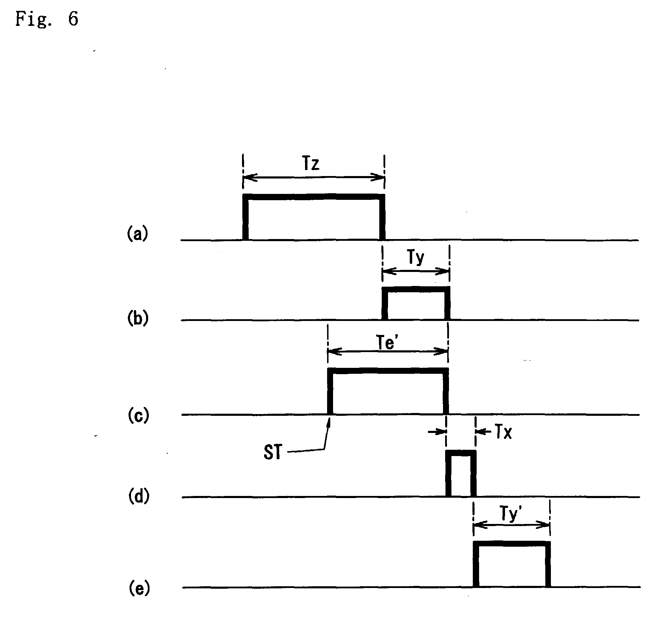

The CPU (central processing unit) 1 controls the entire system according to a program stored beforehand in a ROM 2. The CPU 1 performs signal processing based on a position detection signal from the position detecting section 6, a pressure detection signal from the adsorption pressure detecting section 10 and data stored in a RAM 3 to output an ejection signal instructing the ejecting mechanism section 8 to eject the molded product. Specifically, the ejection time of the ejecting mechanism section 8 is measured beforehand; the retaining mechanism section 7 starts to move upon receipt of a take-out signal; in the course of the movement of the section 7, the time taken for the retaining mechanism section 7 to move from the waiting section to each position to which the section 7 has moved is constantly detected; and a target arrival time at which the retaining mechanism section 7 will arrive at the take-out position when moving from each detected position is constantly calculated. Then, it is determined whether the target arrival time thus calculated is coincident with the ejection time, and at the moment (see FIGURE 5(c) and FIGURE 6(c)) when the former becomes coincident with the latter, an ejection signal is released, thereby starting the operation of the ejecting mechanism section 8.

Next, the operation of the molded product take-out apparatus of the first embodiment will be explained.

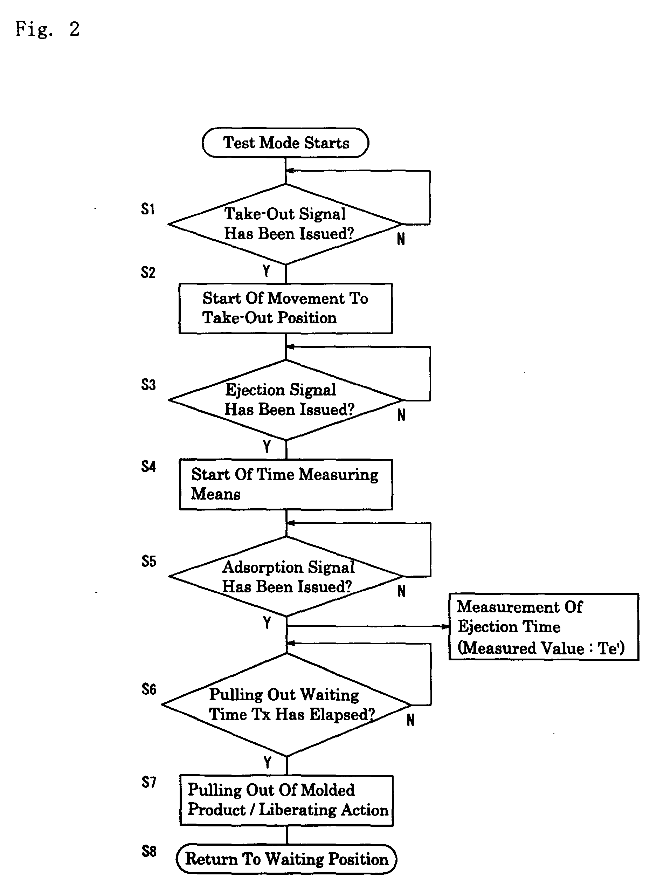

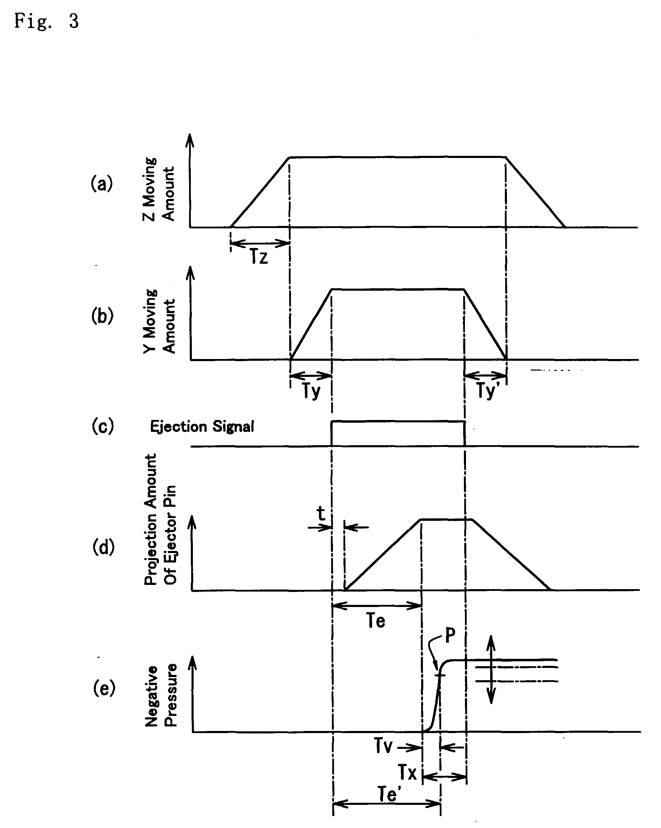

Whenever a new molding cycle is started, operation in a test mode (teaching operation) is carried out. FIGURE 2 shows a flow chart of the operation of the CPU 1 in the test mode. FIGURE 3 is a graph which illustrates the timing of each action in the operation.

In the test mode (see FIGURE 2), at Step S1, a check is constantly made to determine whether die opening has been completed, releasing a take-out signal. At Step S2, if a take-out signal has been released, the moving mechanism section 5 starts to move the retaining mechanism section 7 from the waiting section (see FIGURE (A), not indicated hereinafter) to a pulling out position (see FIGURE 10(B), not indicated hereinafter) and then to a take-out position (see FIGURE 10(C), not indicated hereinafter). The moving amount of the retaining mechanism section 7 which is moving toward the pulling out position increases during the movement as shown in FIGURE 3(a) and the retaining mechanism section 7 reaches the pulling out position after an elapse of the time Tz. Subsequently, the retaining mechanism section 7 changes its course. The moving amount of the retaining mechanism section 7 which is moving toward the take-out position increases as shown in FIGURE 3(b) and then the retaining mechanism section 7 reaches the removing section after an elapse of the time Ty.

After confirming that the retaining mechanism section 7 has arrived at the take-out position, an ejection signal for instructing the ejecting mechanism section 8 to start ejection is issued as shown in FIGURE 3(c). At Step S3, whether an ejection signal has been issued is monitored. After an ejection signal has been issued, the operation of the time measuring means 4 is started at Step S4 and ejection by the ejecting mechanism section 8 is executed a delay time of t later to separate the molded product from the die half as shown in FIGURE 3(d).

At Step S5, an adsorption signal indicating that the adsorption pressure of the adsorbing mechanism 9 has reached a preset adsorption pressure value P is released and then, a check is made to determine whether an adsorption signal has been issued. After an elapse of the time Te after an ejection signal has been issued, the ejecting mechanism section 8 arrives at the terminal point of its forward movement. The molded product ejected by the ejecting mechanism section 8 is adsorbed by the adsorbing mechanism 9. At that time, the adsorption pressure of the adsorbing mechanism 9 is detected by the adsorption pressure detecting section 10, transmitting a pressure detection signal to the CPU 1. Here, adsorption pressure is represented by negative pressure (vacuum) as shown in FIGURE 3(e). Once the molded product is adsorbed by the adsorbing mechanism 9 of the retaining mechanism section 7, negative pressure increases and when it reaches the preset pressure value P, the adsorption is completed. The adsorption completion pressure P is determined to be, for example, 600 mmHg. The adsorption pressure of the adsorbing mechanism 9 finally reaches a value in proximity to a vacuum of 760 mmHg. How much the preset adsorption pressure value P is set can be arbitrarily determined according to the type of the molded product, but it should be sufficient to hold the molded product by the adsorbing mechanism 9.

When the output of an adsorption signal has been confined, the time measuring means 4 which started its operation at Step S4 is stopped and the ejection time Te' which has been measured up to that time is temporarily stored in the RAM 3.

Then, it is determined at Step S6 whether the pulling-out waiting time Tx for the retaining mechanism section 7 which is adsorbing the molded product has elapsed, and if it is determined that the pulling-out time has elapsed, the retaining mechanism section 7 moves back. This pulling-out waiting time Tx is usually set by a timer and when the timer has counted the set time (Tx), the CPU 1 releases a pulling-out signal to the moving mechanism section 5, instructing the backward movement of the retaining mechanism section 7.

Thereafter, the molded product is pulled out by the retaining mechanism section 7 at Step S7 and then, the retaining mechanism section 7 moves to a molded product retrieving position where it liberates the molded product. At Step S8, the retaining mechanism section 7 returns to its initial waiting position.

The test mode is thus completed. The time chart of the operation in the test mode is similar to the time chart shown in FIGURE 12.

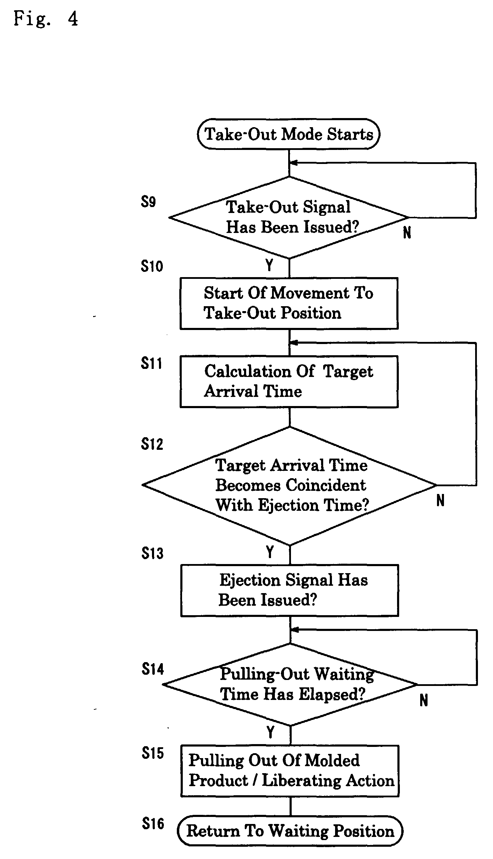

After the test mode, operation is performed in the actual take-out mode. FIGURE 4 shows a flow chart of the operation of the CPU 1 in the actual take-out mode, and FIGURE 5 is a graph for illustrating the timing for each action in the operation of this mode.

The removing operation will be explained with reference to FIGURE 4. At Step S9, a check is constantly made to determine whether die opening has been completed, releasing a take-out signal. At step S10, a take-out signal is issued and subsequently, the moving mechanism section 5 allows the retaining mechanism section 7 to start moving to the pulling out position and to the take-out position.

Thereafter, at Step S11, the CPU 1 calculates a target arrival time at which the retaining mechanism section 7 will arrive at the take-out position when moving from each detected position. This calculation is done by calculating the time data of the moving mechanism section 5, which are stored beforehand in the RAM 3 and associated with the time required for reaching the take-out position from the waiting position, based on a position detection signal inputted from the position detecting section 6 and indicative of the moving distance of the moving mechanism section 5 from the waiting section. The CPU 1 also calculates, at Step S11, the moment ST at which this target arrival time becomes coincident with the ejection time Te' which was stored in the RAM 3 during the operation in the test mode.

At Step S12, a check is made to determine whether the moment ST at which the target arrival time becomes coincident with the ejection time Te' has come, that is, whether it is the timing for outputting an ejection signal, and if it is the output timing ST, an ejection signal is outputted to start the operation of the ejecting mechanism section 8 at the next Step S13. This allows the timing (after an elapse of the time Te') of completion of the separation of the molded product from the die half by the ejecting mechanism section 8 to be coincident with the arrival moment (after an elapse of the time Ty) at which the retaining mechanism section 7 arrives at the take-out position (see FIGURES 5(b) and 5(d)). At this timing, the molded product is adsorbed by the retaining mechanism section 7 to be taken out of the die half.

Then, a check is made at Step S14 to determine whether the specified pulling-out waiting time Tx has elapsed. If the pulling-out waiting time Tx has elapsed, the molded product is pulled out by the retaining mechanism section 7 at Step S15, and thereafter, the retaining mechanism section 7 is moved to the molded product retrieving position where it takes a liberating action. Then, the retaining mechanism section 7 returns to its initial waiting section at Step S17.

The actual take-out mode is thus completed. The time chart of the actual take-out mode is shown in FIGURE 6.

As described above, in the molded product take-out apparatus of the first embodiment, the CPU 1 constantly calculates the target arrival time at which the retaining mechanism section 7 will arrive at the take-out position when moving from each detected position. Then, it is determined whether or not this calculated target arrival time becomes coincident with the ejection time Te' at which the separation of the molded product from the die half is completed, and at the moment ST when the former becomes coincident with the latter, an ejection signal is released thereby starting the operation of the ejecting mechanism section 8. This allows the ejection mechanism section 8 to be operated simultaneously with the movement of the retaining mechanism section 7 so that the separation of the molded product from the die half carried out by means of the ejecting mechanism section 8 is finished at substantially the same time that the retaining mechanism section 7 arrives at the take-out position (see FIGURES 6(b) and 6(c)). Hence, the total time required for removing the molded product in the invention can be lessened by the time corresponding to the ejection time of the ejecting mechanism section, compared to the prior art system shown in FIGURE 12.

The ejection time is measured beforehand by the time measuring means 4 based on the adsorption pressure of the absorption pressure detecting section 10. With this arrangement, the ejection time required for the separation of the molded product from the die half by the ejecting mechanism section 8 can be easily grasped in the apparatus for taking out molded products without provision of a desired detecting means on the side of the die mechanism.

[Embodiment 2]

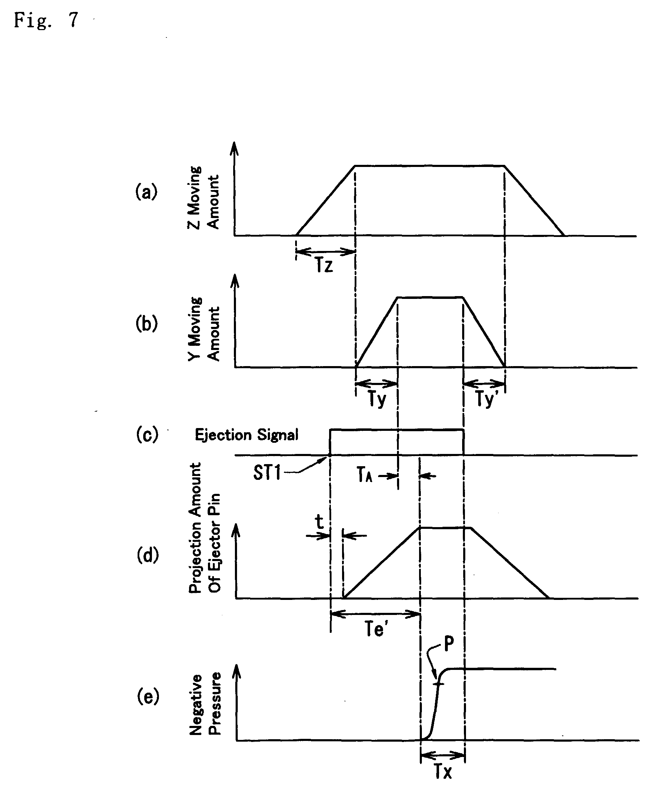

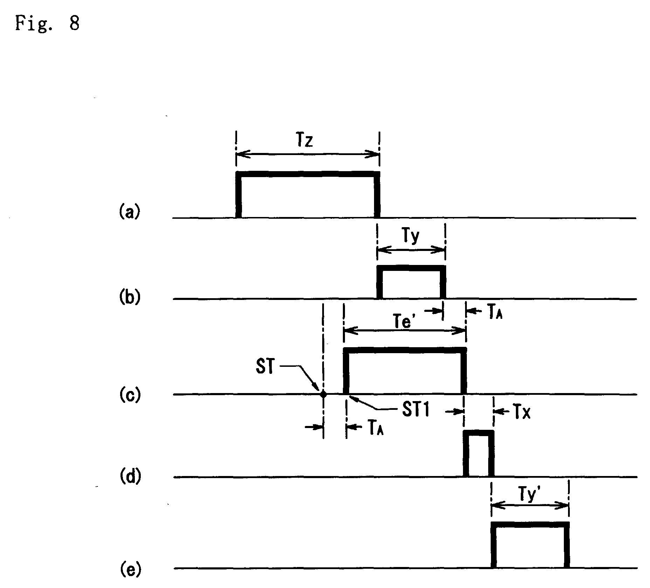

While an ejection signal is issued at the moment ST when the target arrival time becomes coincident with the ejection time (Te') in the actual molded product take-out mode in the first embodiment, the second embodiment is designed as shown in FIGURES 7 and 8 such that an ejection signal is issued by the CPU 1 at the moment ST1 (see FIGURE 8(c)) that is a specified period of delay time (TA) later than the moment ST when the target arrival time becomes coincident with the ejection time (Te'). Accordingly, the second embodiment has the same structure as that of the first embodiment 1 except that the time for issuing an ejection signal is retarded from ST to ST1.

The delay time (TA) can be arbitrarily determined as far as it does not exceed the ejection time Te' required for the separation of the molded product from the die half by the ejecting mechanism section 8 and may be set to, for instance, about 20% of the ejection time Te' in the second embodiment.

As mentioned earlier, in the second embodiment, an ejection signal is issued at the moment ST1 which is the specified delay time (TA) later than the moment ST when the target arrival time becomes coincident with the ejection time (Te'), so that the separation of the molded product from the die half is completed the delay time TA later than the moment when the retaining mechanism section 7 reaches the take-out position. Therefore, even if the ejecting operation of the ejecting mechanism section 8 becomes faster during the operation of the apparatus, the quickened ejection time is offset by the above delay time TA so that the ejecting action will not finish before the arrival of the retaining mechanism section 7. Accordingly, the retaining mechanism section 7 can more firmly grip the molded product without causing imperfect adsorption, compared to the existing system shown in FIGURE 11. In addition, the total removing time for the molded product can be shortened by the ejection time (Te' - TA) which is obtained by subtracting the delay time TA from the ejection time (Te'), compared to the existing system shown in FIGURE 12.

The molded product take-out apparatus of the invention is not limited to the first and second embodiments but may be arranged such that the ejection time (Te') is subtracted from the time (Tz + Ty) at which the retaining mechanism section 7 arrives at the take-out position (C) from the waiting position (A), thereby obtaining the time (Tz + Ty - Te'), and an ejection signal is released at the moment ST which is the time (Tz + Ty - Te') later than a start of the removing operation, or at the moment ST1 which is the delay time TA later than the moment ST.

The take-out apparatus for molded products of the invention is applicable to all kinds of molding machines which require removal of molded products after die opening, such as injection molding machines for molding products from resin and injection molding machines for molding products from magnesium or alumina.

Although the delay time TA is set to a specified percentage (20%) of the ejection time Te' in the second embodiment, it may be set to a specified percentage of the ejection time (Te in FIGURE 3(d)) elapsing from the moment at which the ejector pin of the ejecting mechanism section 8 starts its action until the moment at which the ejector pin arrives at the terminal point of its forward movement. In the latter case, there is a likelihood that the determination of the ejection time Te may entail complexity in the apparatus as discussed earlier. Therefore, the ejection time Te may be obtained in such a way that the die mechanism is provided with a proximate switch or the like for detecting the terminal point of the forward movement of the ejector pin and the ejection time Te is obtained from a signal sent from the proximate switch. Alternatively, it may be obtained in such a way that the time Tv elapsing from a start of the adsorption of the molded product by the adsorbing mechanism 9 until the adsorption pressure reaches the set adsorption pressure value P is obtained (see FIGURE 3(e)) based on a pressure detection signal from the adsorption pressure detecting section 10, and then the time Tv is subtracted from the ejection time Te'.

In an apparatus for taking out a molded product by adsorbing after die opening, a CPU 1 calculates a target arrival time at which a retaining mechanism section 7 will arrive at a take-out position, and at the moment ST at which the target arrival time becomes coincident with the ejection time Te' required for the separation of the molded product, an ejection signal is released for starting the operation of the ejecting mechanism section 8. With this arrangement, the time for taking out the molded product is reduced while imperfect adsorption by the retaining mechanism section is avoided.

**Claims**

**1.** An apparatus for taking out a molded product by adsorption by use of a retaining mechanism section provided with an adsorbing mechanism, the molded product having been separated from a die half by an ejecting mechanism section after die opening, the apparatus comprising:

(1) position detector means for detecting the position of the retaining mechanism section during its movement, the retaining mechanism section starting to move upon receipt of a take-out signal instructing actuation of the retaining mechanism section;

(2) adsorption pressure detector means for detecting the adsorption pressure of the adsorbing mechanism which adsorbs a molded product;

(3) measuring means for measuring an ejection time elapsing after an issue of an ejection signal which instructs actuation of the ejecting mechanism section until an issue of an adsorption signal which is released at the time when the pressure detected by the adsorption pressure detector means has reached a preset adsorption pressure value; and

(4) a controller section for outputting a take-out signal. ejection signal and adsorption signal and for calculating a target arrival time at which the retaining mechanism section will arrive at a take-out position where the molded product is to be taken out, when moving from each detected position detected by the position detector means,

the controller section outputting an ejection signal at the moment when the target arrival time becomes coincident with the ejection time which has been measured beforehand by said measuring means.

**2.** An apparatus for taking out a molded product according to claim 1, wherein said controller section issues an ejection signal at a moment which is a specified delay time later than the moment when the target arrival time becomes coincident with the ejection time.

**3.** An apparatus for taking out a molded product according to claim 2, wherein said delay time is determined to be within a range which does not exceed said ejection time.

**4.** An apparatus for taking out a molded product according to claim 2, wherein said delay time is set to 20% of the ejection time.

**5.** An apparatus for taking out a molded product according to claim 1, which is applied to take out of a molded product in an injection molding machine for producing a resin, magnesium or alumina molded product.

Fig. 1

9
2
3
7
Molded Product Adsorbing Mechanism
ROM
RAM
Molded Product Retaining Mechanism Section
1
CPU
10
8
Adsorption Pressure Detecting Section
Ejecting Mechanism Section
6
5
4
Position Detector Means
Moving Mechanism Section
Time Measuring Means

Fig. 2

Test Mode Starts
S1
Take-Out Signal
Has Been Issued?
N
Y
S2
Start Of Movement To
Take-Out Position
S3
Ejection Signal
Has Been Issued?
N
Y
S4
Start Of Time Measuring
Means
S5
Adsorption Signal
Has Been Issued?
N
Y
Measurement Of
Ejection Time
(Measured Value : Te')
S6
Pulling Out Waiting
Time Tx Has Elapsed?
N
Y
S7
Pulling Out Of Molded
Product / Liberating Action
S8
Return To Waiting Position

Fig. 3

(a)
Z Moving Amount
Tz
(b)
Y Moving Amount
Ty
Ty'
(c)
Ejection Signal
(d)
Projection Amount Of Ejector Pin
t
Te
(e)
Negative Pressure
P
Tv
Tx
Te'

Fig. 4

Take-Out Mode Starts
S9
Take-Out Signal Has Been Issued?
N
Y
S10
Start Of Movement To Take-Out Position
S11
Calculation Of Target Arrival Time
S12
Target Arrival Time Becomes Coincident With Ejection Time?
N
Y
S13
Ejection Signal Has Been Issued?
S14
Pulling-Out Waiting Time Has Elapsed?
N
Y
S15
Pulling Out Of Molded Product / Liberating Action
S16
Return To Waiting Position

Fig. 5

(a)
Z Moving Amount
Tz
(b)
Y Moving Amount
Ty
Ty'
(c)
Ejection Signal
ST
Projection Amount Of Ejector Pin
t
(d)
Te'
P
(e)
Negative Pressure
Tx

Fig. 6

Tz
(a)
Ty
(b)
Te'
(c)
ST
Tx
(d)
Ty'
(e)

Fig. 7

(a)
Z Moving Amount
Tz
(b)
Y Moving Amount
Ty
Ty'
(c)
Ejection Signal
ST1
TA
Projection Amount Of Ejector Pin
t
(d)
Te'
P
(e)
Negative Pressure
Tx

Fig. 8

Tz
(a)
Ty
(b)
Te'
TA
ST
(c)
ST1
TA
Tx
(d)
Ty'
(e)

Fig. 9

Die Clamping
Injection
Cooling
Die Rereasing
Taking Out Molded Product
(a)
(b)
(c)
(d)
(e)

Fig. 10

7
9
9
(A)
Tz
30
Te
40
Ty
(B)
(C)
8
20

Fig. 11

Tz
(a)
Ty
(b)
Te
(c)
ST
Tx
(d)
Ty'
(e)

Fig. 12

Tz
(a)
Ty
(b)
Te
(c)
Tx
(d)
Ty'
(e)

European Patent Office

# EUROPEAN SEARCH REPORT

Application Number
EP 00 10 9627

## DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| A | DE 41 10 948 A (REMAK MASCHINENBAU GMBH) 8 October 1992 (1992-10-08) * column 1, line 46 - column 4, line 31; claims 1-10; figure 1 * | 1-5 | B29C45/42 |
| A | US 5 753 280 A (COXHEAD BRUCE F) 19 May 1998 (1998-05-19) * column 5, line 47 - column 6, line 9 * * column 10, line 8 - line 23; figures 2,3 * | 1-5 | |
| E | EP 1 008 433 A (YUSHIN SEIKI KK) 14 June 2000 (2000-06-14) * column 8, line 24 - column 15, line 7 * | 1-5 | |

TECHNICAL FIELDS SEARCHED (Int.Cl.7)

B29C

The present search report has been drawn up for all claims

| Place of search | Date of completion of the search | Examiner |
|---|---|---|
| MUNICH | 17 August 2000 | Lanz, P |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**ANNEX TO THE EUROPEAN SEARCH REPORT ON EUROPEAN PATENT APPLICATION NO.** EP 00 10 9627

This annex lists the patent family members relating to the patent documents cited in the above-mentioned European search report.
The members are as contained in the European Patent Office EDP file on
The European Patent Office is in no way liable for these particulars which are merely given for the purpose of information.

17-08-2000

| Patent document cited in search report | Publication date | Patent family member(s) | Publication date |
|---|---|---|---|
| DE 4110948 A | 08-10-1992 | NONE | |
| US 5753280 A | 19-05-1998 | DE 19727749 A | 15-01-1998 |
| | | US 5951936 A | 14-09-1999 |
| EP 1008433 A | 14-06-2000 | JP 2979404 B | 15-11-1999 |
| | | JP 2000167890 A | 20-06-2000 |

EPO FORM P0459

For more details about this annex : see Official Journal of the European Patent Office, No. 12/82